# EUROPÄISCHE PATENTSCHRIFT

(11) **EP 3 395 592 B1**
(45) Veröffentlichungstag und Bekanntmachung des Hinweises auf die Patenterteilung: **30.09.2020**
(21) Anmeldenummer: 18167139.7
(22) Anmeldetag: 13.04.2018
(51) Int. Cl.: B60H 1/00, B60H 1/14, B60H 1/22

(54) **FAHRZEUGTEMPERIERSYSTEM**
TEMPERATURE REGULATING SYSTEM FOR A VEHICLE
SYSTÈME DE MISE EN TEMPÉRATURE POUR VÉHICULE

(30) Priorität: 25.04.2017 DE 102017108832
(43) Veröffentlichungstag der Anmeldung: 31.10.2018
(73) Patentinhaber: Eberspächer Climate Control Systems GmbH & Co. KG, 73730 Esslingen (DE)
(72) Erfinder: Eberspach, Günter, 72649 Wolfschlugen (DE); Humburg, Michael, 73035 Göppingen (DE); Jensen, Hans, 73265 Dettingen (DE)
(74) Vertreter: Ruttensperger Lachnit Trossin Gomoll

(56) Entgegenhaltungen:
- EP-A1- 2 743 473
- DE-A1-102009 042 774
- DE-A1-102011 109 703
- DE-A1-102013 209 045
- DE-A1-102015 106 336
- DE-T5-112015 000 552

## Beschreibung

Die vorliegende Erfindung betrifft ein Fahrzeugtemperiersystem, das insbesondere in Hybridfahrzeugen, wie zum Beispiel Plugin-Hybridfahrzeugen, eingesetzt werden kann.

Bei Hybridfahrzeugen wird die zum Betreiben eines Elektro-Antriebsmotors genutzte Fahrzeugbatterie insbesondere im Elektro-Antriebszustand einerseits durch den Elektro-Antriebsmotor, andererseits durch weitere Verbraucher elektrischer Energie, wie zum Beispiel der Leistungselektronik, stark belastet. Ferner besteht bei derartigen beispielsweise als Lithium-Ionen-Batterien aufgebauten Fahrzeugbatterien die Anforderung, dass diese in einem für deren Betrieb optimalen Temperaturfenster arbeiten sollen, um einerseits eine ausreichende Versorgung der Verbraucher elektrischer Energie sicherstellen zu können, andererseits auch gewährleisten zu können, dass im Ladebetrieb die Batterie wieder aufgeladen werden kann.

Ein Fahrzeugtemperiersystem gemäß dem Oberbegriff des Anspruchs 1 ist aus der DE 11 2015 000 552 T5 bekannt.

Es ist die Aufgabe der vorliegenden Erfindung, ein Fahrzeugtemperiersystem, insbesondere für ein Hybridfahrzeug, vorzusehen, welches eine verbesserte Nutzung der in einem Fahrzeug bereitgestellten thermischen Energie ermöglicht.

Erfindungsgemäß wird diese Aufgabe gelöst durch ein Fahrzeugtemperiersystem, insbesondere für ein Hybridfahrzeug, gemäß Anspruch 1. Dieses umfasst:
- einen ersten Wärmeträgermediumkreislauf mit einer Brennkraftmaschine, einem Heizgerät und wenigstens einem, vorzugsweise einer Mehrzahl von Wärmeübertragungsbereichen zur Wärmeübertragung zwischen einem in dem ersten Wärmeträgermediumkreislauf zirkulierenden ersten Wärmeträgermedium und einer ersten Gruppe von thermisch zu konditionierenden Systembereichen,
- einen zweiten Wärmeträgermediumkreislauf mit wenigstens einem, vorzugsweise einer Mehrzahl von Wärmeübertragungsbereichen zur Wärmeübertragung zwischen einem in dem zweiten Wärmeträgermediumkreislauf zirkulierenden zweiten Wärmeträgermedium und einer zweiten Gruppe von thermisch zu konditionierenden Systembereichen,
- eine Wärmeträgermediumkreislauf-Wärmetauscheranordnung zur Wärmeübertragung zwischen dem im ersten Wärmeträgermediumkreislauf zirkulierenden ersten Wärmeträgermedium und dem im zweiten Wärmeträgermediumkreislauf zirkulierenden zweiten Wärmeträgermedium.

Das erfindungsgemäß aufgebaute Fahrzeugtemperiersystem umfasst Wärmeträgermediumkreisläufe, die grundsätzlich zum Wärmeaustausch miteinander gekoppelt sind, für sich jedoch verschiedenen Systembereichen eines Fahrzeugs zugeordnet sind. So kann beispielsweise der erste Wärmeträgermediumkreislauf im Wesentlichen einer Brennkraftmaschine bzw. den einer Brennkraftmaschine zugeordneten Systembereichen eines Fahrzeugs zugeordnet sein, um diese in geeigneter Weise thermisch zu konditionieren, während der zweite Wärmeträgermediumkreislauf im Wesentlichen den für einen Elektro-Fahrbetrieb vorgesehenen Systembereichen eines Fahrzeugs zugeordnet sein kann. Durch die Möglichkeit, zwischen diesen beiden Wärmeträgermediumkreisläufen Wärmeenergie auszutauschen, kann die in einem der Kreisläufe vorhandene überschüssige thermische Energie auf den anderen Kreislauf übertragen werden, um diesen bzw. diesem zugeordnete Systembereiche zu erwärmen. Es kann somit weitestgehend vermieden werden, dass die in einem Fahrzeug generierte thermische Energie als Verlustwärme nach außen abgegeben wird.

Gemäß der vorliegenden Erfindung besteht zwischen dem ersten Wärmeträgermediumkreislauf und dem zweiten Wärmeträgermediumkreislauf keine Wärmeträgermediumaustauschverbindung. Somit ist gewährleistet, dass eine zu einer übermäßigen Erwärmung oder Abkühlung führende thermische Wechselwirkung zwischen den beiden Wärmeträgermediumkreisläufen nicht entstehen kann.

Um, abhängig von den thermischen Bedingungen, die Brennkraftmaschine als Wärmequelle oder Wärmesenke nutzen zu können, ist ferner vorgesehen, dass der erste Wärmeträgermediumkreislauf eine erste Wärmeträgermediumkreislauf-Ventilanordnung umfasst zum Freigeben/Sperren der Brennkraftmaschine für/gegen die Durchströmung mit erstem Wärmeträgermedium.

Gemäß einem besonders vorteilhaften Aspekt ist weiter vorgesehen, dass die Wärmeträgermediumkreislauf-Wärmetauscheranordnung und eine Heizgerät-Wärmetauscheranordnung des Heizgeräts unabhängig von einer Schaltstellung der ersten Wärmeträgermediumkreislauf-Ventilanordnung von erstem Wärmeträgermedium durchströmbar ist. Somit wird gewährleistet, dass, unabhängig davon, ob dem ersten Wärmeträgermediumkreislauf zugeordnete Systembereiche thermisch behandelt werden sollen, eine thermische Wechselwirkung mit dem Heizgerät einerseits bzw. dem anderen Wärmeträgermediumkreislauf andererseits ermöglicht ist.

Um die dem ersten Wärmeträgermediumkreislauf zugeordneten Systembereiche in geeigneter Weise erwärmen zu können oder gegebenenfalls Wärme von diesen abführen zu können, wird vorgeschlagen, dass der erste Wärmeträgermediumkreislauf in Zuordnung zu wenigstens einem, vorzugsweise jedem Systembereich der ersten Gruppe von Systembereichen eine Systembereich-Wärmetauscheranordnung zur Übertragung von Wärme zwischen dem Systembereich und dem ersten Wärmeträgermedium umfasst.

Dabei kann eine von anderen Systembereichen unabhängige thermische Behandlung einzelner Systembereiche dadurch gewährleistet werden, dass der erste Wärmeträgermediumkreislauf in Zuordnung zu wenigstens einem, vorzugsweise jedem Systembereich der ersten Gruppe von Systembereichen eine Systembereich-Ventilanordnung umfasst zum Freigeben/Sperren der Systembereich-Wärmetauscheranordnung für/gegen die Durchströmung mit erstem Wärmeträgermedium.

Die erste Gruppe von Systembereichen kann einen oder mehreren der nachfolgend angegebenen Systembereiche umfassen:
- das in der Brennkraftmaschine vorgesehene Brennkraftmaschinenöl,
- das in einem der Brennkraftmaschine zugeordneten Getriebe vorgesehene Getriebeöl,
- einen Fahrzeuginnenraum.

Die Brennkraftmaschine kann einen von erstem Wärmeträgermedium durchströmbaren Wärmeträgermedium-Mantel umfassen, wobei der Brennkraftmaschine eine erste Kühler-Wärmetauscheranordnung zugeordnet ist zur Abgabe von Wärme von den Wärmeträgermedium-Mantel durchströmendem ersten Wärmeträgermedium.

Die zweite Gruppe von Systembereichen kann einen oder mehreren der nachfolgend angegebenen Systembereiche umfassen:
- eine Fahrzeugbatterie,
- eine Batterieladeeinheit,
- eine Fahrzeugelektronik.

Während die erste Gruppe von Systembereichen im wesentlichen Systembereiche umfasst, die mit der Brennkraftmaschine in Zusammenhang stehen bzw. bei herkömmlichen Fahrzeugen auch durch die in der Brennkraftmaschine entstehende Wärme thermisch konditioniert werden, umfasst die zweite Gruppe von Systembereichen im wesentlichen Systembereiche, die primär für das elektrische Fahren eines Fahrzeugs genutzt werden bzw. erforderlich sind.

Es ist darauf hinzuweisen, dass im Sinne der vorliegenden Erfindung eine Gruppe von Systembereichen einen einzigen oder mehrere Systembereiche umfassen kann.

Gemäß einem besonders vorteilhaften Aspekt wird vorgeschlagen, dass im zweiten Wärmeträgermediumkreislauf die Wärmeträgermediumkreislauf-Wärmetauscheranordnung und die Fahrzeugbatterie oder/und Fahrzeugelektronik von zweitem Wärmeträgermedium seriell durchströmbar sind, oder/und dass im zweiten Wärmeträgermediumkreislauf die Wärmeträgermediumkreislauf-Wärmetauscheranordnung und die Batterieladeeinheit von zweitem Wärmeträgermedium parallel durchströmbar sind. Durch die parallele Durchströmbarkeit der Wärmeträgermediumkreislauf-Wärmetauscheranordnung und der Batterieladeeinheit wird gewährleistet, dass die im Bereich der Wärmeträgermediumkreislauf-Wärmetauscheranordnung auf das zweite Wärmeträgermedium Wärmeenergie im Wesentlichen nicht dazu genutzt wird, die Batterieladeeinheit zu erwärmen, da die Batterieladeeinheit eine thermisch im Wesentlichen unkritische Baugruppe ist und für einen geeigneten Betrieb nicht thermisch konditioniert werden muss.

Es ist darauf hinzuweisen, dass dann, wenn ausgeführt ist, dass ein Systembereich, wie zum Beispiel die Fahrzeugbatterie, von einem Wärmeträgermedium durchströmbar ist, dieser Systembereich eine von dem Wärmeträgermedium durchströmbare Wärmetauscheranordnung umfasst, in welcher beispielsweise Wärme von dem Wärmeträgermedium aufgenommen werden kann und dann auf die im Betrieb thermisch zu konditionierenden Bereiche eines jeweiligen Systembereichs übertragen werden kann oder von diesen Bereichen auf das die jeweils zugeordnete Wärmetauscheranordnung durchströmende Wärmeträgermedium übertragen werden kann.

Um die Wärmeträgermediumkreislauf-Wärmetauscheranordnung zur Wärmeübertragung nutzen zu können bzw. diese gegen eine Wärmeübertragung zu sperren, wird vorgeschlagen, dass der zweite Wärmeträgermediumkreislauf eine zweite Wärmeträgermediumkreislauf-Ventilanordnung umfasst zum Freigeben/Sperren der Wärmeträgermediumkreislauf-Wärmetauscheranordnung für/gegen die Durchströmung mit zweitem Wärmeträgermedium. Es brauchen somit im Bereich des ersten Wärmeträgermediumkreislaufs keine baulichen Maßnahmen vorgesehen werden, um die Wärmeträgermediumkreislauf-Wärmetauscheranordnung zu aktivieren oder zu deaktivieren.

Die Wärmeträgermediumkreislauf-Wärmetauscheranordnung und die zweite Wärmeträgermediumkreislauf-Ventilanordnung können von zweitem Wärmeträgermedium seriell und zusammen bezüglich der Batterieladeeinheit parallel durchströmbar sein.

Da im Elektro-Fahrbetrieb im Bereich der diesem Betrieb genutzten Systembereiche Wärme entstehen kann und diese, abhängig von den Umgebungsbedingungen, abgeführt werden muss, um eine Überhitzung zu vermeiden, wird vorgeschlagen, dass der zweite Wärmeträgermediumkreislauf eine zweite Kühler-Wärmetauscheranordnung umfasst zur Abgabe von Wärme von im zweiten Wärmeträgermediumkreislauf zirkulierendem zweitem Wärmeträgermedium.

Dazu kann der zweiten Kühler-Wärmetauscheranordnung eine Kühler-Ventilanordnung zugeordnet sein zum Freigeben/Sperren der zweiten Kühler-Wärmetauscheranordnung für/gegen die Durchströmung mit zweitem Wärmeträgermedium.

Um in den beiden Wärmeträgermediumkreisläufen eine Zirkulation des dort jeweils vorgesehenen Wärmeträgermediums erzeugen zu können, kann jeder Wärmeträgermediumkreislauf wenigstens eine Wärmeträgermediumpumpe umfassen.

Das Heizgerät kann ein brennstoffbetriebenes Heizgerät sein. Dies gewährleistet, dass auch bei Belastung der Fahrzeugbatterie beispielsweise im Elektro-Fahrbetrieb Wärme insbesondere zur Erwärmung eines Fahrzeuginnenraums bereitgestellt werden kann und die Fahrzeugbatterie hierzu nicht zusätzlich belastet wird, so dass die Reichweite im Elektro-Fahrbetrieb erhöht werden kann.

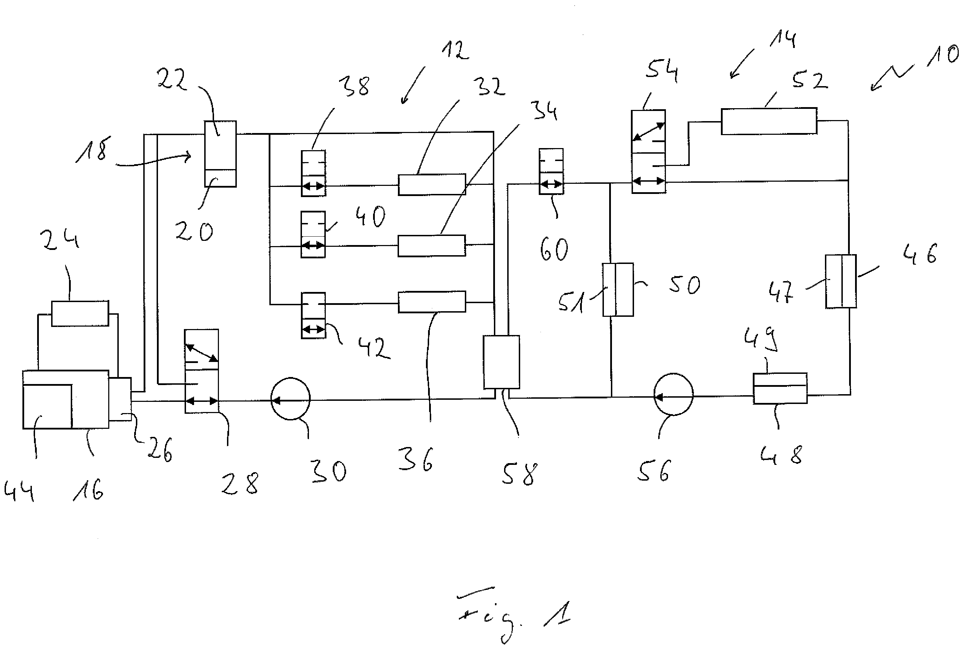

Die vorliegende Erfindung wird nachfolgend mit Bezug auf die beiliegende Fig. 1 detailliert beschrieben, welche in prinzipartiger Darstellung ein Fahrzeugtemperiersystem zeigt.

In Fig. 1 ist ein Fahrzeugtemperiersystem allgemein mit 10 bezeichnet. Das Fahrzeugtemperiersystem 10 umfasst zwei in thermischer Wechselwirkung miteinander stehende oder bringbare Wärmeträgermediumkreisläufe 12, 14, zwischen welchen jedoch keine Wärmeträgermediumaustauschverbindung besteht. Das im ersten Wärmeträgermediumkreislauf 12 zirkulierende erste Wärmeträgermedium kann nicht in den zweiten Wärmeträgermediumkreislauf 14 gelangen, während das im zweiten Wärmeträgermediumkreislauf 14 zirkulierende zweite Wärmeträgermedium nicht in den ersten Wärmeträgermediumkreislauf gelangen kann. Gleichwohl kann für das erste Wärmeträgermedium und das zweite Wärmeträgermedium das gleiche vorzugsweise flüssige Medium, wie zum Beispiel im Wesentlichen Wasser, verwendet werden.

Der erste Wärmeträgermediumkreislauf 12 umfasst als wesentliche Bestandteile eine als Antriebsaggregat für ein Fahrzeug nutzbaren Brennkraftmaschine 16 sowie ein vorzugsweise brennstoffbetriebenes Heizgerät 18 mit einem Brennerbereich 20 und einer Heizgerät-Wärmetauscheranordnung 22. Ein Wärmeträgermedium-Mantel der Brennkraftmaschine 16 und die Heizgerät-Wärmetauscheranordnung 22 sind von dem im ersten Wärmeträgermediumkreislauf 12 zirkulierenden ersten Wärmeträgermedium durchströmbar.

Der Brennkraftmaschine 16 ist eine erste Kühler-Wärmetauscheranordnung 24 zugeordnet. Vermittels einer Thermostatanordnung 26 kann die erste Kühler-Wärmetauscheranordnung 24 zur Durchströmung freigeschaltet werden, so dass beispielsweise in einem Zustand, in welchem das erste Wärmeträgermedium eine ausreichend hohe Temperatur aufweist bzw. nicht weiter erwärmt werden soll, überschüssige Wärme an die Umgebung abgegeben werden kann. Da in diesem Zustand die Zufuhr weiterer Energie in das erste Wärmeträgermedium nicht erforderlich ist, wird das Heizgerät 18 nicht betrieben, so dass das erste Wärmeträgermedium die Heizgerät-Wärmetauscheranordnung 22 durchströmt, ohne dort Wärme aufzunehmen.

Der erste Wärmeträgermediumkreislauf 12 umfasst ferner eine erste Wärmeträgermediumkreislauf-Ventilanordnung 28. Durch diese erste Wärmeträgermediumkreislauf-Ventilanordnung 28 kann, abhängig von deren Schaltstellung, die Brennkraftmaschine 16 zur Durchströmung mit erstem Wärmeträgermedium freigegeben werden, wie dies bei der in Fig. 1 dargestellten Schaltstellung der Fall ist, oder kann gegen Durchströmung gesperrt werden, so dass das im ersten Wärmeträgermediumkreislauf 12 durch die Förderwirkung einer Wärmeträgermedium. 30 zirkulierende Wärmeträgermedium nicht die Brennkraftmaschine, jedoch die Heizgerät-Wärmetauscheranordnung 22 durchströmt.

Der erste Wärmeträgermediumkreislauf 12 umfasst ferner mehrere zueinander parallel geschaltete oder schaltbare Systembereich-Wärmetauscheranordnungen 32, 34, 36 und diesen jeweils zugeordnete Systembereich-Ventilanordnungen 38, 40, 42. Durch die Systembereich-Ventilanordnungen 38, 40, 42 können die diesen jeweils zugeordneten Systembereich-Wärmetauscheranordnungen 32, 34, 36 zur Durchströmung freigegeben bzw. gesperrt werden.

Die Systembereich-Wärmetauscheranordnungen 32, 34, 36 sind jeweils verschiedenen Systembereichen einer ersten Gruppe von Systembereichen zugeordnet, wobei die erste Gruppe von Systembereichen sich dadurch auszeichnet, dass deren Systembereiche durch das im ersten Wärmeträgermediumkreislauf 12 zirkulierende erste Wärmeträgermedium direkt erwärmt werden können oder Wärme auf dieses übertragen werden können. So kann beispielsweise die Systembereich-Wärmetauscheranordnung 32 dazu vorgesehen sein, eine thermische Wechselwirkung mit dem als ein derartiger Systembereich der ersten Gruppe zu betrachtenden Brennkraftmaschinenöl der Brennkraftmaschine 16 herzustellen. Dazu kann beispielsweise die Systembereich-Wärmetauscheranordnung 32 im Bereich einer Ölwanne der Brennkraftmaschine 16 angeordnet sein oder über entsprechende Leitungsverbindungen mit der Brennkraftmaschine 16 verbunden sein, um Wärme vom Brennkraftmaschinenöl auf das erste Wärmeträgermedium zu übertragen, oder umgekehrt. Die Systembereich-Wärmetauscheranordnung 34 kann in Zuordnung zu dem als weiterer Systembereich der ersten Gruppe von Systembereichen zu betrachtenden Getriebeöl eines der Brennkraftmaschine 16 zugeordneten Getriebes 44 vorgesehen sein, um, abhängig von den thermischen Bedingungen, Wärme aus dem Getriebeöl in das erste Wärmeträgermedium zu übertragen, oder umgekehrt. Die Systembereich-Wärmetauscheranordnung 36 kann dazu vorgesehen sein, die in einen als weiteren Systembereich der ersten Gruppe von Systembereichen zu betrachtenden Fahrzeuginnenraum einzuleitende Luft zu erwärmen. Dazu kann die Systembereich-Wärmetauscheranordnung 36 von dieser durch ein Gebläse geförderten Luft umströmt werden.

Abhängig von den thermischen Bedingungen ist es somit möglich, auf die verschiedenen Systembereiche Wärme zu übertragen oder Wärme von diesen aufzunehmen und auf einen oder mehrere andere Systembereiche zu übertragen oder einen oder mehrere dieser Systembereiche, ebenso wie die Brennkraftmaschine 16 selbst, durch das Heizgerät 18 zu erwärmen.

Der zweite Wärmeträgermediumkreislauf 14 umfasst, beispielsweise seriell vom zweiten Wärmeträgermedium durchströmbar, eine oder mehrere Fahrzeugbatterien 46, beispielsweise Lithium-Ionen-Batterie, eine oder einen Teil der Fahrzeugelektronik 48, insbesondere Leistungselektronik, sowie eine Batterieladeeinheit 50, über welche die Fahrzeugbatterie 46 beispielsweise aus einem stationären Stromnetz geladen werden kann. Ferner umfasst der zweite Wärmeträgermediumkreislauf 14 eine zweite Kühler-Wärmetauscheranordnung 52, welche vermittels einer zweiten Wärmeträgermediumkreislauf-Ventilanordnung 54 zur Durchströmung mit vermittels einer Wärmeträgermediumpumpe 56 gefördertem zweitem Wärmeträgermedium freigegeben oder gegen Durchströmung gesperrt werden kann. Die bei Belastung der verschiedenen insbesondere für den Elektro-Fahrbetrieb eines Fahrzeugs vorgesehenen Systembereiche entstehende Wärme kann, sofern die Gefahr einer übermäßigen Erwärmung dieser Systembereiche besteht, somit erforderlichenfalls über die zweite Kühler-Wärmetauscheranordnung 52 zur Umgebung abgegeben werden. Es sei hier darauf hingewiesen, dass für eine thermische Wechselwirkung mit dem im zweiten Wärmeträgermediumkreislauf zirkulierenden zweiten Wärmeträgermedium die dem zweiten Wärmeträgermediumkreislauf zugeordneten Systembereiche einer zweiten Gruppe von Systembereichen, also beispielsweise die Fahrzeugbatterie 46, die Fahrzeugelektronik 48 sowie die Batterieladeeinheit 50, jeweilige vom zweiten Wärmeträgermedium durchströmbare Wärmetauscheranordnungen 47, 49, 51 aufweisen können.

Um die beiden Wärmeträgermediumkreisläufe 12, 14 thermisch miteinander zu koppeln, ist eine Wärmeträgermediumkreislauf-Wärmetauscheranordnung 58 vorgesehen. Diese ist sowohl vom ersten Wärmeträgermedium, als auch vom zweiten Wärmeträgermedium durchströmbar, so dass Wärme von dem wärmeren Wärmeträgermedium auf das kältere Wärmeträgermedium übertragen werden kann. Dabei ist in Zuordnung zum ersten Wärmeträgermediumkreislauf 12 die Wärmeträgermediumkreislauf-Wärmetauscheranordnung 58 seriell zur Heizgerät-Wärmetauscheranordnung 22 angeordnet und, so wie diese, unabhängig vom Schaltzustand der ersten Wärmeträgermediumkreislauf-Ventilanordnung 28 von erstem Wärmeträgermedium durchströmbar. In Zuordnung zum zweiten Wärmeträgermediumkreislauf 14 ist die Wärmeträgermediumkreislauf-Wärmetauscheranordnung 58 seriell zu der Fahrzeugbatterie 46 und der Fahrzeugelektronik 48 angeordnet und ist zusammen mit einer zweiten Wärmeträgermediumkreislauf-Ventilanordnung 60 parallel zur Ladeeinheit 50 angeordnet.

Ist die zweite Wärmeträgermediumkreislauf-Ventilanordnung 60 in ihrem in Fig. 1 dargestellten Schaltzustand, in welchem sie die Wärmeträgermediumkreislauf-Wärmetauscheranordnung 58 zur Durchströmung frei gibt, zirkuliert das zweite Wärmeträgermedium durch die Wärmeträgermediumkreislauf-Wärmetauscheranordnung 58, die Fahrzeugbatterie 46 und die Fahrzeugelektronik 48. In diesem Zustand kann das zweite Wärmeträgermedium in der Wärmeträgermediumkreislauf-Wärmetauscheranordnung 58 Wärme vom ersten Wärmeträgermedium aufnehmen und auf die oder einen Teil der Systembereiche der zweiten Gruppe von Systembereichen übertragen und diese somit erwärmen. Sind diese Systembereiche ausreichend warm oder sollen diese gegebenenfalls gekühlt werden, also durch das zweite Wärmeträgermedium Wärme abgetragen werden, so kann dies, beispielsweise bei durch die zweite Wärmeträgermediumkreislauf-Ventilanordnung 60 gesperrter Wärmeträgermediumkreislauf-Wärmetauscheranordnung 58, über die zweite Kühler-Wärmetauscheranordnung 52 erfolgen, oder kann, sofern diese überschüssige Wärme im Bereich von einem der Systembereiche der ersten Gruppe von Systembereichen genutzt werden kann, über die durch die zweite Wärmeträgermediumkreislauf-Ventilanordnung 60 zur Durchströmung freigegebene Wärmeträgermediumkreislauf-Wärmetauscheranordnung 58 auf das erste Wärmeträgermedium übertragen werden.

Das erfindungsgemäß aufgebaute Fahrzeugtemperiersystem ermöglicht somit eine hohe Variabilität in der Ausnutzung der im Bereich eines Fahrzeugs generierten Wärme, stellt jedoch gleichzeitig sicher, dass die den beiden Wärmeträgermediumkreisläufen zugeordneten Gruppen von Systembereichen in jedem der Wärmeträgermediumkreisläufe auch jeweils unabhängig von der anderen Gruppe in geeigneter Weise thermisch konditioniert werden können. So kann beispielsweise bei gegen Durchströmung gesperrter Wärmeträgermediumkreislauf-Wärmetauscheranordnung 58 und im Elektro-Fahrbetrieb betriebenem Hybridfahrzeug im ersten Wärmeträgermediumkreislauf 12 die Brennkraftmaschine 16 beispielsweise durch Betreiben des Heizgeräts 18 bereits thermisch konditioniert werden, um sicherzustellen, dass dann, wenn von einem Elektro-Fahrbetrieb in einen Brennkraftmaschinen-Fahrbetrieb übergegangen werden muss oder soll, die Brennkraftmaschine 16 bzw. das Brennkraftmaschinenöl und das Getriebeöl bereits ausreichend erwärmt sind. Die Brennkraftmaschine 16 kann dann in einem auch zu einem verminderten Schadstoffausstoß führenden thermisch konditionieren Zustand in Betrieb genommen werden. Andererseits können durch im Bereich des ersten Wärmeträgermediumkreislaufs 12 beispielsweise durch die Brennkraftmaschine 16 oder/und das Heizgerät 18 bereitgestellte Wärme Systembereiche der zweiten Gruppe von Systembereichen ausreichend erwärmt werden, was insbesondere dazu genutzt werden kann, die für eine geeignete Rekuperation der Fahrzeugbatterie 46 erforderliche Temperatur derselben bereitzustellen bzw. schneller zu erreichen.

## Patentansprüche

1. Fahrzeugtemperiersystem, insbesondere für ein Hybridfahrzeug, umfassend:
- einen ersten Wärmeträgermediumkreislauf (12) mit einer Brennkraftmaschine (16) und wenigstens einem, vorzugsweise einer Mehrzahl von Wärmeübertragungsbereichen (32, 34, 36) zur Wärmeübertragung zwischen einem in dem ersten Wärmeträgermediumkreislauf (12) zirkulierenden ersten Wärmeträgermedium und einer ersten Gruppe von thermisch zu konditionierenden Systembereichen,
- einen zweiten Wärmeträgermediumkreislauf (14) mit wenigstens einem, vorzugsweise einer Mehrzahl von Wärmeübertragungsbereichen zur Wärmeübertragung zwischen einem in dem zweiten Wärmeträgermediumkreislauf zirkulierenden zweiten Wärmeträgermedium und einer zweiten Gruppe von thermisch zu konditionierenden Systembereichen (46, 48, 50),
- eine Wärmeträgermediumkreislauf-Wärmetauscheranordnung (58) zur Wärmeübertragung zwischen dem im ersten Wärmeträgermediumkreislauf (12) zirkulierenden ersten Wärmeträgermedium und dem im zweiten Wärmeträgermediumkreislauf (14) zirkulierenden zweiten Wärmeträgermedium, wobei zwischen dem ersten Wärmeträgermediumkreislauf (12) und dem zweiten Wärmeträgermediumkreislauf (14) keine Wärmeträgermediumaustauschverbindung besteht,
**dadurch gekennzeichnet, dass** der erste Wärmeträgermediumkreislauf (12) ein Heizgerät (18) mit einer Heizgerät-Wärmetauscheranordnung (22) und eine erste Wärmeträgermediumkreislauf-Ventilanordnung (28) umfasst zum Freigeben/Sperren der Brennkraftmaschine (16) für/gegen die Durchströmung mit erstem Wärmeträgermedium, und dass die Wärmeträgermediumkreislauf-Wärmetauscheranordnung (58) und die Heizgerät-Wärmetauscheranordnung (22) unabhängig von einer Schaltstellung der ersten Wärmeträgermediumkreislauf-Ventilanordnung (28) von erstem Wärmeträgermedium durchströmbar ist.

2. Fahrzeugtemperiersystem nach einem der vorangehenden Ansprüche, **dadurch gekennzeichnet, dass** der erste Wärmeträgermediumkreislauf (12) in Zuordnung zu wenigstens einem, vorzugsweise jedem Systembereich der ersten Gruppe von Systembereichen eine Systembereich-Wärmetauscheranordnung (32, 34, 36) zur Übertragung von Wärme zwischen dem Systembereich und dem ersten Wärmeträgermedium umfasst.

3. Fahrzeugtemperiersystem nach Anspruch 2, **dadurch gekennzeichnet, dass** der erste Wärmeträgermediumkreislauf (12) in Zuordnung zu wenigstens einem, vorzugsweise jedem Systembereich der ersten Gruppe von Systembereichen eine Systembereich-Ventilanordnung (38, 40, 42) umfasst zum Freigeben/Sperren der Systembereich-Wärmetauscheranordnung (32, 34, 36) für/gegen die Durchströmung mit erstem Wärmeträgermedium.

4. Fahrzeugtemperiersystem nach einem der vorangehenden Ansprüche, **dadurch gekennzeichnet, dass** die erste Gruppe von Systembereichen einen oder mehreren der nachfolgend angegebenen Systembereiche umfasst:
- das in der Brennkraftmaschine (16) vorgesehene Brennkraftmaschinenöl,
- das in einem der Brennkraftmaschine (16) zugeordneten Getriebe (44) vorgesehene Getriebeöl,
- einen Fahrzeuginnenraum.

5. Fahrzeugtemperiersystem nach einem der vorangehenden Ansprüche, **dadurch gekennzeichnet, dass** die Brennkraftmaschine (16) einen von erstem Wärmeträgermedium durchströmbaren Wärmeträgermedium-Mantel umfasst, wobei der Brennkraftmaschine eine erste Kühler-Wärmetauscheranordnung (24) zugeordnet ist zur Abgabe von Wärme von den Wärmeträgermedium-Mantel durchströmendem ersten Wärmeträgermedium.

6. Fahrzeugtemperiersystem nach einem der vorangehenden Ansprüche, **dadurch gekennzeichnet, dass** die zweite Gruppe von Systembereichen einen oder mehreren der nachfolgend angegebenen Systembereiche umfasst:
- eine Fahrzeugbatterie (46),
- eine Batterieladeeinheit (50),
- eine Fahrzeugelektronik (48).

7. Fahrzeugtemperiersystem nach Anspruch 6, **dadurch gekennzeichnet, dass** im zweiten Wärmeträgermediumkreislauf (14) die Wärmeträgermediumkreislauf-Wärmetauscheranordnung (58) und die Fahrzeugbatterie (46) oder/und Fahrzeugelektronik (48) von zweitem Wärmeträgermedium seriell durchströmbar sind, oder/und dass im zweiten Wärmeträgermediumkreislauf (14) die Wärmeträgermediumkreislauf-Wärmetauscheranordnung (58) und die Batterieladeeinheit (50) von zweitem Wärmeträgermedium parallel durchströmbar sind.

8. Fahrzeugtemperiersystem nach einem der vorangehenden Ansprüche, **dadurch gekennzeichnet, dass** der zweite Wärmeträgermediumkreislauf (14) eine zweite Wärmeträgermediumkreislauf-Ventilanordnung (60) umfasst zum Freigeben/Sperren der Wärmeträgermediumkreislauf-Wärmetauscheranordnung (58) für/gegen die Durchströmung mit zweitem Wärmeträgermedium.

9. Fahrzeugtemperiersystem nach Anspruch 7 und Anspruch 8, **dadurch gekennzeichnet, dass** die Wärmeträgermediumkreislauf-Wärmetauscheranordnung (58) und die zweite Wärmeträgermediumkreislauf-Ventilanordnung (60) von zweitem Wärmeträgermedium seriell und zusammen bezüglich der Batterieladeeinheit (50) parallel durchströmbar sind.

10. Fahrzeugtemperiersystem nach einem der vorangehenden Ansprüche, **dadurch gekennzeichnet, dass** der zweite Wärmeträgermediumkreislauf (14) eine zweite Kühler-Wärmetauscheranordnung (52) umfasst zur Abgabe von Wärme von im zweiten Wärmeträgermediumkreislauf (14) zirkulierendem zweitem Wärmeträgermedium.

11. Fahrzeugtemperiersystem nach Anspruch 10, **dadurch gekennzeichnet, dass** der zweiten Kühler-Wärmetauscheranordnung (52) eine zweite Kühler-Ventilanordnung (54) zugeordnet ist zum Freigeben/Sperren der zweiten Kühler-Wärmetauscheranordnung (52) für/gegen die Durchströmung mit zweitem Wärmeträgermedium.

12. Fahrzeugtemperiersystem nach einem der vorangehenden Ansprüche, **dadurch gekennzeichnet, dass** jeder Wärmeträgermediumkreislauf (12, 14) wenigstens eine Wärmeträgermediumpumpe (30, 56) umfasst, oder/und dass das Heizgerät (18) ein brennstoffbetriebenes Heizgerät (18) ist.

## Claims

1. Vehicle temperature control system, especially for a hybrid vehicle, comprising:
- a first heat transfer medium circuit (12) with an internal combustion engine (16), and with at least one heat transfer area, preferably with a plurality of heat transfer areas (32, 34, 36) for the transfer of heat between a first heat transfer medium circulating in the first heat transfer medium circuit (12) and a first group of system areas to be thermally treated,
- a second heat transfer medium circuit (14) with at least one heat transfer area, preferably with a plurality of heat transfer areas for the transfer of heat between a second heat transfer medium circulating in the second heat transfer medium circuit and a second group of system areas (46, 48, 50) to be thermally treated,
- a heat transfer medium circuit heat exchanger arrangement (58) for the transfer of heat between the first heat transfer medium circulating in the first heat transfer medium circuit (12) and the second heat transfer medium circulating in the second heat transfer medium circuit (14), wherein there is no heat transfer medium exchange connection between the first heat transfer medium circuit (12) and the second heat transfer medium circuit (14),
**characterized in that** the first heat transfer medium circuit (12) comprises a heating device (18) with a heating device heat exchanger arrangement (22) and a first heat transfer medium circuit valve arrangement (28) for releasing/blocking the internal combustion engine (16) for/against the flow of the first heat transfer medium and **in that** the first heat transfer medium can flow through the heat transfer medium circuit heat exchanger arrangement (58) and the heating device heat exchanger arrangement (22) of the heating device (18) regardless of a switching position of the first heat transfer medium circuit valve arrangement (28).

2. Vehicle temperature control system in accordance with one of the preceding claims, **characterized in that** the first heat transfer medium circuit (12) comprises a system area heat exchanger arrangement (32, 34, 36) in association with at least one system area, preferably with each system area of the first group of system areas for the transfer of heat between the system area and the first heat transfer medium.

3. Vehicle temperature control system in accordance with claim 2, **characterized in that** the first heat transfer medium circuit (12) comprises a system area valve arrangement (38, 40, 42) in association with at least one system area, preferably with each system area of the first group of system areas for releasing/blocking the system area heat exchanger arrangement (32, 34, 36) for/against the flow of the first heat transfer medium.

4. Vehicle temperature control system in accordance with one of the preceding claims, **characterized in that** the first group of system areas comprises one or more of the system areas indicated below:
- the internal combustion engine oil provided in the internal combustion engine (16),
- the transmission fluid provided in a transmission (44) associated with the internal combustion engine (16), and
- the interior of a vehicle.

5. Vehicle temperature control system in accordance with one of the preceding claims, **characterized in that** the internal combustion engine (16) comprises a heat transfer medium jacket through which the first heat transfer medium can flow, wherein a first cooler heat exchanger arrangement (24) is associated with the internal combustion engine for the emission of heat from the first heat transfer medium flowing through the heat transfer medium jacket.

6. Vehicle temperature control system in accordance with one of the preceding claims, **characterized in that** the second group of system areas comprises one or more of the system areas indicated below:
- a vehicle battery (46),
- a battery charging unit (50), and
- vehicle electronics (48).

7. Vehicle temperature control system in accordance with claim 6, **characterized in that** in the second heat transfer medium circuit (14), the second heat transfer medium can flow in series through the heat transfer medium circuit heat exchanger arrangement (58) and the vehicle battery (46) or/and vehicle electronics (48), or/and that in the second heat transfer medium circuit (14), the second heat transfer medium can flow parallel through the heat transfer medium circuit heat exchanger arrangement (58) and the battery charging unit (50).

8. Vehicle temperature control system in accordance with one of the preceding claims, **characterized in that** the second heat transfer medium circuit (14) comprises a second heat transfer medium circuit valve arrangement (60) for releasing/blocking the heat transfer medium circuit heat exchanger arrangement (58) for/against the flow of the second heat transfer medium.

9. Vehicle temperature control system in accordance with claim 7 and claim 8, **characterized in that** the second heat transfer medium flows in series through the heat transfer medium circuit heat exchanger arrangement (58) and the second heat transfer medium circuit valve arrangement (60) and parallel together in relation to the battery charging unit (50).

10. Vehicle temperature control system in accordance with one of the preceding claims, **characterized in that** the second heat transfer medium circuit (14) comprises a second cooler heat exchanger arrangement (52) for the emission of heat from the second heat transfer medium circulating in the second heat transfer medium circuit (14).

11. Vehicle temperature control system in accordance with claim 10, **characterized in that** a second cooler valve arrangement (54) is associated with the second cooler heat exchanger arrangement (52) for releasing/blocking the second cooler heat exchanger arrangement (52) for/against the flow of the second heat transfer medium.

12. Vehicle temperature control system in accordance with one of the preceding claims, **characterized in that** each heat transfer medium circuit (12, 14) comprises at least one heat transfer medium pump (30, 56), or/and that the heating device (18) is a fuel-operated heating device (18).

## Revendications

1. Système de régulation de la température du véhicule, notamment pour un véhicule hybride, comprenant:
- un premier circuit de médium caloporteur (12) avec un moteur à combustion interne (16), et avec au moins une zone de transfert de chaleur, de préférence avec une pluralité de zones de transfert de chaleur (32, 34, 36) pour le transfert de chaleur entre un premier médium caloporteur circulant dans le premier circuit de médium caloporteur (12) et un premier groupe de zones de système à traiter thermiquement,
- un deuxième circuit de médium caloporteur (14) avec au moins une zone de transfert de chaleur, de préférence avec une pluralité de zones de transfert de chaleur pour le transfert de chaleur entre un deuxième médium caloporteur circulant dans le deuxième circuit de médium caloporteur et un deuxième groupe de zones de système (46, 48, 50) à traiter thermiquement, et
- un dispositif d'échangeur de chaleur à circuit de médium caloporteur (58) pour le transfert de chaleur entre le premier médium caloporteur circulant dans le premier circuit de médium caloporteur (12) et le deuxième médium caloporteur circulant dans le deuxième circuit de médium caloporteur (14), dans lequel il n'y a pas de liaison d'échange de médium caloporteur entre le premier circuit de médium caloporteur (12) et le deuxième circuit de médium caloporteur (14),
**caractérisé en ce que** le premier circuit de médium caloporteur (12) comprend un dispositif de chauffage (18) avec un arrangement d'échangeur de chaleur de dispositif de chauffage (22) et un premier arrangement de soupape de circuit de médium caloporteur (28) pour libérer/bloquer le moteur à combustion interne (16) pour/contre l'écoulement du premier médium caloporteur et **en ce que** le premier médium caloporteur peut s'écouler à travers l'arrangement d'échangeur de chaleur de circuit de médium caloporteur (58) et l'arrangement d'échangeur de chaleur de dispositif de chauffage (22) du dispositif de chauffage (18) indépendamment d'une position de commutation de l'arrangement de soupape de circuit de médium caloporteur (28).

2. Système de régulation de la température d'un véhicule selon l'une des revendications précédentes, **caractérisé en ce que** le premier circuit de médium caloporteur (12) comprend un agencement d'échangeur de chaleur de zone de système (32, 34, 36) en association avec au moins une zone de système, de préférence avec chaque zone de système du premier groupe de zones de système pour le transfert de chaleur entre la zone de système et le premier médium caloporteur.

3. Système de régulation de la température d'un véhicule selon la revendication 2, **caractérisé en ce que** le premier circuit de médium de transfert de chaleur (12) comprend un agencement de soupape de zone de système (38, 40, 42) en association avec au moins une zone de système, de préférence avec chaque zone de système du premier groupe de zones de système pour libérer/bloquer l'agencement d'échangeur de chaleur de zone de système (32, 34, 36) pour/contre l'écoulement du premier médium de transfert de chaleur.

4. Système de régulation de la température d'un véhicule selon l'une des revendications précédentes, **caractérisé en ce que** le premier groupe de zones de système comprend une ou plusieurs des zones de système indiquées ci-dessous :
- l'huile pour moteur à combustion interne prévue dans le moteur à combustion interne (16),
- l'huile à engrenages prévue dans une transmission (44) associée au moteur à combustion interne (16), et
- l'intérieur d'un véhicule.

5. Système de régulation de la température d'un véhicule selon l'une des revendications précédentes, **caractérisé en ce que** le moteur à combustion interne (16) comporte une enveloppe de médium caloporteur pouvant être traversée par le premier médium caloporteur, un premier agencement d'échangeur de chaleur de refroidisseur (24) étant associé au moteur à combustion interne pour l'émission de chaleur du premier médium caloporteur traversant l'enveloppe de médium caloporteur.

6. Système de régulation de la température d'un véhicule selon l'une des revendications précédentes, **caractérisé en ce que** le deuxième groupe de zones de système comprend une ou plusieurs des zones de système indiquées ci-dessous :
- une batterie de véhicule (46),
- une unité de chargement de batterie (50), et
- l'électronique des véhicules (48).

7. Système de régulation de la température d'un véhicule selon la revendication 6, **caractérisé en ce que** dans le deuxième circuit de médium caloporteur (14), le deuxième médium caloporteur peut circuler en série à travers le dispositif d'échangeur de chaleur du circuit de médium caloporteur (58) et la batterie du véhicule (46) et/ou l'électronique du véhicule (48), ou/et **en ce que** dans le deuxième circuit de médium caloporteur (14), le deuxième médium caloporteur peut circuler en parallèle à travers le dispositif d'échangeur de chaleur du circuit de médium caloporteur (58) et l'unité de chargement de batterie (50).

8. Système de régulation de la température d'un véhicule selon l'une des revendications précédentes, **caractérisé en ce que** le deuxième circuit de médium caloporteur (14) comprend un deuxième agencement de soupape de circuit de médium caloporteur (60) pour libérer/bloquer l'agencement d'échangeur de chaleur du circuit de médium caloporteur (58) pour/contre le flux du deuxième médium caloporteur.

9. Système de régulation de la température d'un véhicule selon la revendication 7 et la revendication 8, **caractérisé en ce que** le second médium caloporteur s'écoule en série à travers l'agencement d'échangeur de chaleur du circuit de médium caloporteur (58) et l'agencement de soupape du circuit de médium caloporteur (60) et en parallèle ensemble par rapport à l'unité de chargement de batterie (50).

10. Système de régulation de la température d'un véhicule selon l'une des revendications précédentes, **caractérisé en ce que** le deuxième circuit de médium caloporteur (14) comprend un deuxième agencement d'échangeur de chaleur de refroidisseur (52) pour l'émission de chaleur du deuxième médium caloporteur circulant dans le deuxième circuit de médium caloporteur (14).

11. Système de régulation de la température d'un véhicule selon la revendication 10, **caractérisé en ce qu'**un deuxième agencement de soupape de refroidisseur (54) est associé au deuxième agencement d'échangeur de chaleur de refroidisseur (52) pour libérer/bloquer le deuxième agencement d'échangeur de chaleur de refroidisseur (52) pour/contre l'écoulement du deuxième médium de transfert de chaleur.

12. Système de régulation de la température d'un véhicule selon l'une des revendications précédentes, **caractérisé en ce que** chaque circuit de médium caloporteur (12, 14) comprend au moins une pompe à médium caloporteur (30, 56), et/ou **en ce que** le dispositif de chauffage (18) est un dispositif de chauffage (18) fonctionnant au carburant.
